# EUROPEAN PATENT SPECIFICATION

(11) **EP 4 446 894 B1**
(45) Date of publication and mention of the grant of the patent: **07.10.2026**
(21) Application number: 24162949.2
(22) Date of filing: 12.03.2024
(51) Int. Cl.: G06F 11/362, G06F 9/445, G06F 8/65, G06F 21/53, G06F 21/54, G06F 21/55, G06F 21/50

(54) **CLOUD-DELIVERED HOOKS AND HOOKING POLICIES**
CLOUD-ZUSTELLBARE HAKEN UND EINHÄNGUNGSRICHTLINIEN
CROCHETS ET POLITIQUES D'ACCROCHAGE DÉLIVRÉS EN NUAGE

(30) Priority: 04.04.2023 US 202318295595
(43) Date of publication of application: 16.10.2024
(73) Proprietor: CrowdStrike, Inc., Sunnyvale, CA 94086 (US)
(72) Inventor: Moore, Garrett, Sunnyvale, 94086 (US); Kuhl, Eric, Sunnyvale, 94086 (US); Foster, Blair, Sunnyvale, 94086 (US); Robinson, Loren, Sunnyvale, 94086 (US)
(74) Representative: Murgitroyd & Company

(56) References cited:
- WO-A1-2015/041693
- WO-A1-2016/118145
- WO-A2-00/62141
- US-A1- 2005 240 906
- US-A1- 2006 282 827
- US-A1- 2019 087 210

## Description

### BACKGROUND

The subject matter described herein generally relates to computers and to computer software and, more particularly, the subject matter relates to operating systems and to functional hooking, for instance, for instrumenting, monitoring, and debugging software applications.

Functional hooks provide visibility of software processes and events. Software applications interact with an operating system by invoking functions. Sometimes a function produces a side effect that is externally visible (such as data logging, event tracing, or notifications). Most times, though, a function is internally hidden and produces no visible side effect. Hooking has been used to intercept functions, but functional hooks are slow and laborious to implement and require frequent version updates to software deployed in the field. Conventional hooking solutions simply do not allow for rapid identification and resolution of software bugs, malware, and other update objectives. WO2016118145 A1 relates to detection of malicious invocation of application program interface calls. US2005240906 A1 discloses a system for controlling an application process. WO2015041693 A1 discloses methods of injecting a data flow control object. US2019087210 A1 discloses a system for hooking Java native interface calls from native code to Java code in a Java virtual machine. WO0062141 A2 discloses a method and system for dynamic injection of execution logic into a shared memory space of a windowed operating system. US2006282827 A1 discloses applying a hook to a kernel of an operating system.

### SUMMARY

Cloud-delivered hooks are injected as binary instruments into software applications. The cloud-delivered hooks are specified by, and may originate from, a cloud computing environment. The cloud-delivered hooks may be set up, and torn down, merely by software updates from the cloud computing environment. The cloud-delivered hooks monitor and intercept functions, Application Programming Interfaces (or APIs), or system calls in user space. Moreover, the cloud-delivered hooks may utilize a polymorphic universal hooking mechanism that eliminates strict signature requirements between target functions and detour functions. Because the cloud-delivered hooks are commanded by and sent from the cloud computing environment, the cloud-delivered hooks may be easily and nearly instantaneously distributed to clients in the field for near real time software instrumentation. The cloud-delivered hooks can thus greatly simplify and quicken software development, software debugging, malware detection, and software monitoring. Accordingly there is provided a method, a system, and a computer program as detailed in the claims that follow. The invention is set out by the subject-matter of the independent claims 1, 11 and 12.

### BRIEF DESCRIPTION OF THE DRAWINGS

The features, aspects, and advantages of cloud services malware detection are understood when the following Detailed Description is read with reference to the accompanying drawings, wherein:
FIG. 1 illustrates examples of cloud-delivered hooks in a cloud-computing environment;
FIGs. 2-3 illustrate more examples of the cloud-delivered hooks in the cloud-computing environment;
FIG. 4 illustrates kernel examples of the cloud-delivered hook;
FIG. 5 illustrates examples of kernel notifications;
FIGs. 6-8 illustrate examples of a polymorphic universal hooking mechanism;
FIG. 9 illustrates examples of flow operations for cloud-delivered hooking;
FIGs. 10-12 illustrate examples of methods for hooking software applications; and
FIG. 13 illustrates a more detailed example of an operating environment.

### DETAILED DESCRIPTION

Some examples relate to hooking software applications. Cloud-delivered hooks are added to a software application to reveal its inner operations. The cloud-delivered hooks, though, are sent to a client device via the Internet. That is, the cloud-delivered hooks are specified by a cloud computing environment, and the cloud computing environment distributes the cloud-delivered hooks via the Internet to the client device. When the client device receives the cloud-delivered hooks, the client device may then insert, or inject, the cloud-delivered hooks into the software application.

The cloud-delivered hooks instrument the software application. As the client device executes the software application, the client device will encounter the cloud-delivered hooks. Each cloud-delivered hook causes the client device to intercept predefined, targeted programming (such as a particular function, Application Programming Interface (or API), and/or system call) and to, in addition to, perform a substitute or detour programming. The detour programming is intentionally added and coded, for instance, to allow instrumentation and visibility into operations. In some examples, each cloud-delivered hook thus causes the client device to output descriptions of the instrumented operations. When the cloud-delivered hook completes the substitute/detour programming, the client device returns to the software application and resumes execution.

The cloud-delivered hooks are simple and exceptionally swift to implement. The cloud-delivered hooks are specified by the cloud computing environment. The cloud-delivered hooks may be formatted according to a polymorphic hooking mechanism that ensures compatibility between the target programming and the detour programming. When the cloud computing environment specifies the cloud-delivered hook, the client device utilizes the polymorphic hooking mechanism to format the detour programming to match signature requirements imposed by the target programming. Because the cloud-delivered hooks are specified by the cloud computing environment, the cloud-delivered hooks may be distributed via the Internet to computers, servers, smartphones, appliances, and any other networked client devices. Each client device need only inject the cloud-delivered hooks to immediately instrument the software. Development, debugging, and malware exposure may immediately commence. Moreover, once the cloud-delivered hook exposes its targeted programming, the client device may report that exposure back to the cloud computing environment. Binary instrumentation is thus accomplished within minutes from hundreds or even thousands of client devices deployed in the field.

Cloud-delivered hooking will now be described more fully hereinafter with reference to the accompanying drawings. Cloud-delivered hooking, however, may be embodied in many different forms and should not be construed as limited to the examples set forth herein. These examples are provided so that this disclosure will be thorough and complete and fully convey cloud-delivered hooking services to those of ordinary skill in the art. Moreover, all the examples of cloud-delivered hooking services are intended to encompass both structural and functional equivalents thereof. Additionally, it is intended that such equivalents include both currently known equivalents as well as equivalents developed in the future (*i.e.,* any elements developed that perform the same function, regardless of structure).

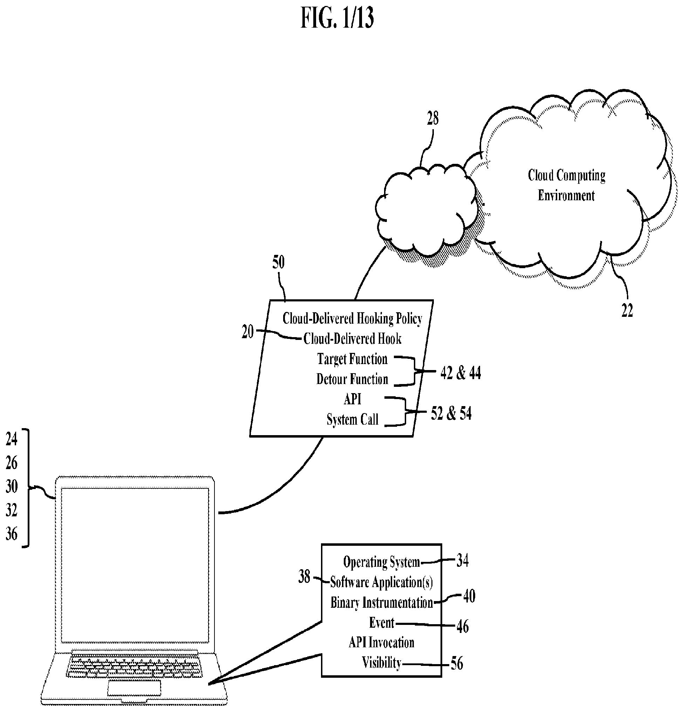

FIG. 1 illustrates examples of cloud-delivered hooks 20 in a cloud-computing environment 22. A client or endpoint computer 24 communicates with the cloud-computing environment 22 via a network interface 26 to a communications network 28. The client/endpoint computer 24 is illustrated as a laptop computer 30, but the client/endpoint computer 24 may be any processor-controlled device (as later paragraphs will explain). The client/endpoint computer 24 has a hardware processor 32 that executes an operating system 34 stored in a memory device 36. The client/endpoint computer 24 also stores software applications 38 in the memory device 36. While the client/endpoint computer 24 may store hundreds or thousands of the software applications 38, some familiar packages of the software applications 38 may include a web browser, email, word processing, spreadsheet, slide presentation, and cloud storage. Because at least some of the software applications 38 have unknown source codes, the cloud-delivered hook(s) 20 reveal inner or even hidden, obfuscated operations. The cloud-computing environment 22 delivers hosted cloud-native services, like storage, servers, and application services, via the communications network 28 (such as the Internet). Various implementations of the cloud-computing environment 22 are possible and could be used in the examples herein described.

Software instrumentation is often desired. Even though the client/endpoint computer 24 may store hundreds or thousands of the software applications 38, some of the software applications 38 have unknown or even obfuscated internal operations. Because the source code of these software applications 38 is often unknown, function and system call hooking approaches are used for binary instrumentation 40. The binary instrumentation 40, in simple words, adds or inserts extra program code to collect information. The extra program code may be added to any of the software applications 38 to monitor and to reveal internal operations. The cloud-delivered hook 20 is an example of the binary instrumentation 40. The cloud-delivered hook 20 is injected into the software application 38 to reveal its internal operations and behavior. Hooking is especially advantageous in malware identification, software testing, and software debugging. Hooking functions and system calls involves identifying a target function 42 to be intercepted at runtime and a corresponding detour function 44. The target function 42 is a function or call to be instrumented (or hooked) and monitored to reveal its operation. The detour function 44 is the extra program code that is added to the software application 38. The detour function 44 modifies the target function 42 by adding code that reveals inner behavior. So, when the software application 38 calls the target function 42, execution jumps or detours to the detour function 44. The detour function 44 executes its monitoring program code, thus revealing the behavior of the target function 42. Once the detour function 44 is completed, execution returns to the software application 38. The target function 42 is modified in cache memory (not on disk), thus enabling interception of binary functions. When the target function 42 and/or the corresponding detour function 44 is executed or determined, an occurrence of an event 46 may be alerted. The detour function 44 thus performs whatever pre-processing and post-processing is specified. Hooking may modify the user mode of the operating system 34, a run-time environment, program libraries, or the executable software application 38. These detoured changes may be prior to program execution or at run-time, and the changes guarantee that the target function 42 will be instrumented whenever called.

Conventional hooking schemes, though, are slow and laborious. Function and system call hooks are conventionally statically-defined and tied to a software release. That is, conventional hooks must be manually added for each function of interest, and these manual efforts require much time and effort. Moreover, in a production environment, conventional hooks must be distributed/downloaded as a new software release to clients in the field, thus preventing rapid response times when misbehavior or malware is detected.

FIG. 1, instead, illustrates examples of the cloud-delivered hooks 20. Each cloud-delivered hook 20 is cloud commanded according to a cloud-delivered hooking policy 50 from the cloud computing environment 22. The cloud-delivered hook 20, in other words, is created by, distributed by, and implemented by the cloud computing environment 22. The cloud-delivered hooking policy 50 defines each cloud-delivered hook 20, such as its corresponding target function 42 and detour function 44. The cloud-delivered hooking policy 50 may further specify Application Programming Interfaces (or APIs) 52 and/or system calls 54 to be hooked (via their corresponding cloud-delivered hooks 20) for additional binary instrumentation 40. Each cloud-delivered hook 20 thus provides a cloud-sourced API invocation visibility 56 into the functions 42 and 44, the APIs 52, and/or the system calls 54 specified by the cloud-delivered hooking policy 50. The cloud-delivered hooking policy 50 dynamically generates each cloud-delivered hook 20 as an endpoint detection and response (or EDR) implementation. Each cloud-delivered hook 20 may also be dynamically torn down, removed/deleted, and/or terminated according to the cloud-delivered hooking policy 50.

The binary instrumentation 40 is thus cloud commanded and cloud defined. The cloud-delivered hooking policy 50 is received from the cloud computing environment 22. The laptop computer 30 stores the cloud-delivered hooking policy 50 to the memory device 36. The laptop computer 30 determines the cloud-delivered hook 20 by reading the cloud-delivered hooking policy 50 and by identifying the cloud-delivered hook 20 specified by the cloud-delivered hooking policy 50. The cloud-delivered hooking policy 50 specifies the target function 42 and/or the detour function 44 associated with the cloud-delivered hook 20. The laptop computer 30 may then hook the software application 38 by injecting the cloud-delivered hook 20 into the programming code representing the software application 38 specified by the cloud-delivered hooking policy 50. The laptop computer 30 thus cloud hooks the target function 42 and executes the detour function 44, as instructed by the cloud-delivered hooking policy 50. Because the cloud-delivered hook(s) 20 is/are cloud commanded and cloud defined, manual hooking is entirely eliminated.

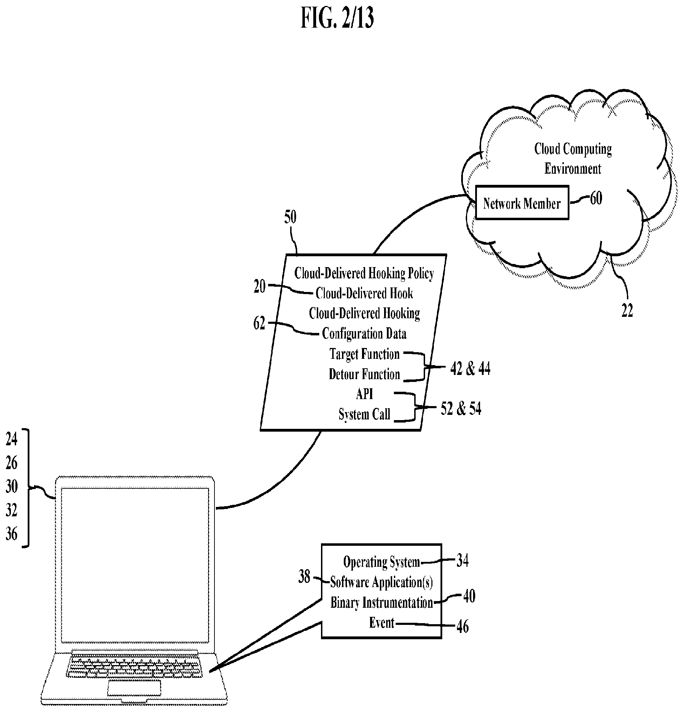

FIGs. 2-3 illustrate more examples of the cloud-delivered hooks 20 in the cloud-computing environment 22. A network member 60 (such as a server, switch, or router) affiliated with the cloud-computing environment 22 sends the cloud-delivered hooking policy 50 (via the communications network 28 illustrated in FIG. 1) to a network address (*e.g.,* Internet Protocol address) associated with the client/endpoint computer 24. When the client/endpoint computer 24 (again illustrated as the laptop computer 30) receives the cloud-delivered hooking policy 50, the operating system 34 instructs or causes the hardware processor 32 to read the cloud-delivered hooking policy 50 and to identify detailed information associated with the cloud-delivered hook 20. The laptop computer 30, for example, may read and identify cloud-delivered hooking configuration data 62 for each corresponding cloud-delivered hook 20. The cloud-delivered hooking configuration data 62 includes at least one of code instructions, data, settings, values, policies, and/or parameters that define the corresponding cloud-delivered hook 20. The cloud-delivered hooking configuration data 62, for example, may specify the target function 42, the API(s) 52, and/or the system call(s) 54 and its corresponding detour function 44. Once the laptop computer 30 receives and determines the cloud-delivered hooking configuration data 62, the laptop computer 30 injects the cloud-delivered hook 20 as specified by the cloud-delivered hooking configuration data 62.

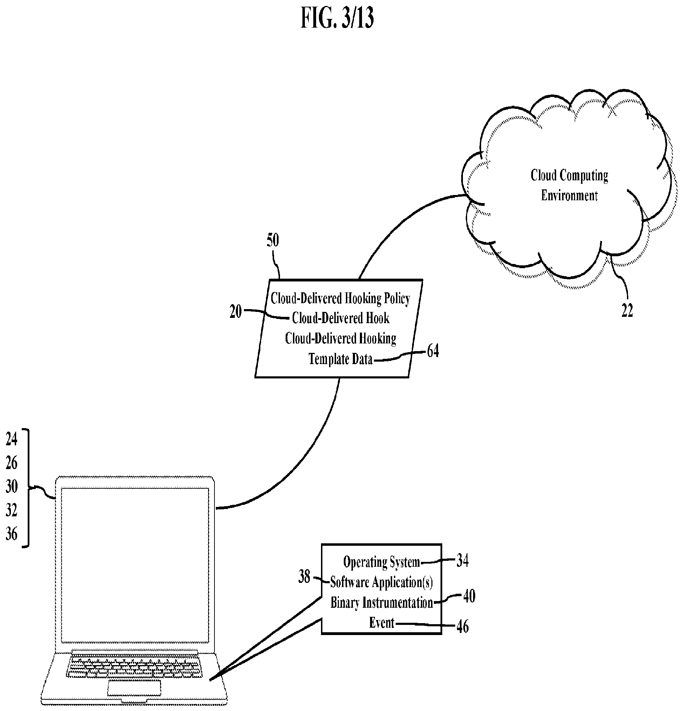

FIG. 3 illustrates examples of cloud-delivered hooking template data 64. When the client/endpoint computer 24 (again illustrated as the laptop computer 30) receives the cloud-delivered hooking policy 50, the operating system 34 may instruct or cause the hardware processor 32 to read the cloud-delivered hooking policy 50 and to identify the cloud-delivered hooking template data 64. The cloud-delivered hooking template data 64 specifies how the detected event 46 is handled and reported. When the event 46 (such as the target function 42, the detour function 44, the API 52, and/or the system call 54 illustrated in FIG. 1) is detected, the cloud-delivered hooking template data 64 specifies or defines how, when, and/or where the event 46 is reported. The cloud-delivered hooking template data 64, for example, may establish a reporting format that defines how the event 46 is alerted (such as an electronic message, SMS text message, log entry, or template notification) and when the event 46 is reported (*e.g.,* immediate, near real time, periodic, etc.). The cloud-delivered hooking template data 64 may further specify a reporting IP address for any/each/all event(s) 46, thus ensuring that an instrumentation output is sent back to the cloud computing environment 22 for logging/monitoring efforts.

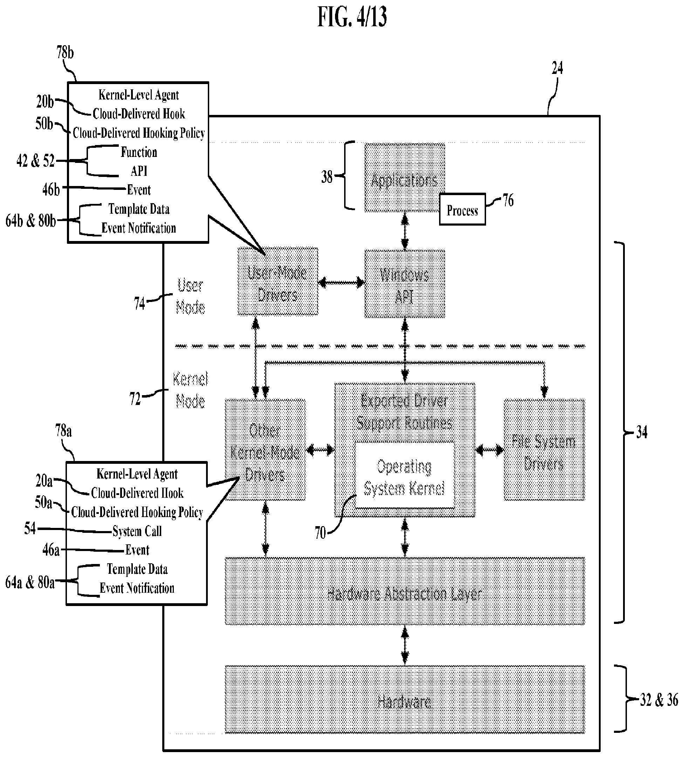

FIG. 4 illustrates kernel examples of the cloud-delivered hook 20. The cloud-delivered hook 20 may be implemented regardless of processor mode of operation. The client/endpoint computer 24 has the hardware processor 32 that executes the operating system 34 stored in the memory device 36. A kernel 70 of the operating system 34 controls utilization and access to the hardware resources 32 and 36. The hardware processor 32 thus has a kernel mode 72 and a user mode 74, and the hardware processor 32 switches between these two modes 72 and 74 depending on what type of code is running on the hardware processor 32. The kernel 70 of the operating system 34, for example, loads and runs in the kernel mode 72 that provides a protected kernel space or portion of the memory device 36. The software applications 38 store and execute from a user space of the memory device 36 associated with the user mode 74. When any user-mode software application 38 starts, launches, or initiates (such as by a user's open tactile selection or app-to-app invocation), the operating system 34 creates a process 76 that corresponds to opening/initiating/selecting/invocating/running the software application 38. While FIG. 4 illustrates the process 76 associated with the user mode 74, the process 76 may additionally or alternatively be associated with the kernel mode 72. The kernel 70 allocates a private space in the memory device 36 that is dedicated to the process 76.

A kernel-level agent 78 interfaces with the operating system 34. The kernel-level agent 78 is a software application or program code that is stored in the memory device 36 and that is executed by the hardware processor 32. When the client/endpoint computer 24 receives the cloud-delivered hooking policy 50, the operating system 34 may send, forward, or share the cloud-delivered hooking policy 50 to/with the kernel-level agent 78. The kernel-level agent 78 may have kernel-mode components 78a having kernel permissions to the kernel mode 72. The kernel-level agent 78 may also have user-mode components 78b in the user mode 74. The kernel-level agent 78 may load before the operating system 34, perhaps very early in the boot-time of the client/endpoint computer 24. The kernel-level agent 78 may be installed in the form of a driver and may be received from the cloud computing environment 22 (illustrated in FIGs. 1-3). Because the kernel-level agent 78 may have the kernel-mode components 78a having kernel permissions to the kernel mode 72, the kernel-level agent 78 has kernel permissions to establish the cloud-delivered hook 20a that instruments/monitors/intercepts the system calls 54 in the kernel mode 72. Moreover, because the kernel-level agent 78 may also have the user-mode components 78b, the kernel-level agent 78 establishes the cloud-delivered hook 20b that instruments/monitors/intercepts the target function 42 and/or the APIs 52 in the user mode 74.

The kernel-level agent 78a-b may receive the events 46a-b that occur on the client/endpoint computer 24. Each event 46a-b may be generated in response to execution of the corresponding cloud-delivered hook 20a-b. The events 46a-b may be received from drivers, from event monitors, from threads monitoring log files or memory locations, and/or the cloud-delivered hooks 20a-b established according to the cloud-delivered hooking policy 50a-b. The cloud-delivered hooks 20a-b may be installed to, added to, or associated with the operating system 34. The cloud-delivered hooks 20a-b intercept, document, and/or alert of the events 46a-b of interest (such as messages, input/output requests, system calls, reads/writes, launches). When any event 46a-b is detected (perhaps as defined or specified by the corresponding cloud-delivered hook 20a-b and/or the cloud-delivered hooking policy 50a-b), the kernel-level agent 78a-b may generate and send an event notification 80a-b to the cloud computing environment 22, perhaps according to the cloud-delivered hooking template data 64a-b. The notification 80a-b thus alerts the cloud computing environment 22 of the event 46a-b occurring at the host client/endpoint computer 24.

Cloud-delivered hooking improves computer functioning. Because the cloud-delivered hooks 20 are generated by the cloud computing environment 22, the cloud-delivered hooking policy 50 eliminates the need for a specific manual implementation of each function of interest. The cloud-delivered hooks 20 may also be changed on-the-fly, without requiring a new version of software to be deployed. Indeed, because the cloud-delivered hooks 20 are generated by the cloud computing environment 22, different packages of the cloud-delivered hooks 20 may be auto-generated and distributed in response to particular threat observations, particular software behaviors, or particular monitoring desires. The cloud computing environment 22, likewise, may tear-down or destroy cloud-delivered hooks 20 in response to resolutions or lack of monitoring needs. The cloud-delivered hooking policy 50 allows a software developer to change visibility into the APIs 52 being used by the process 76 in the client/endpoint computer 24 in response to new information about misbehaviors and threats.

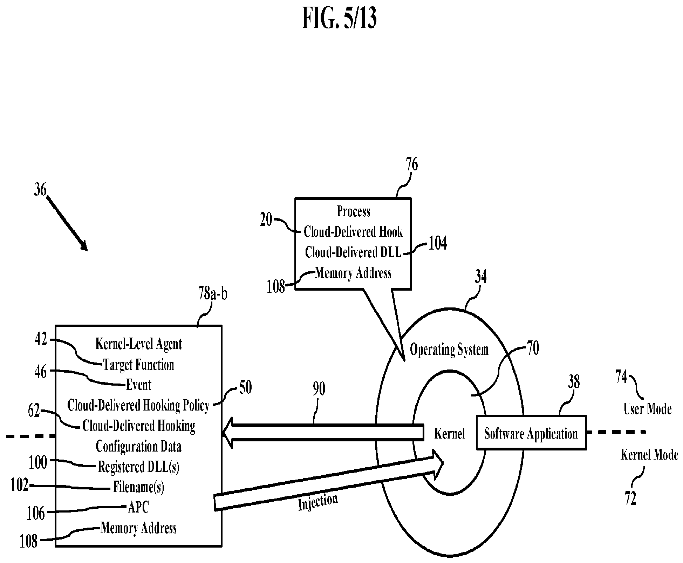

FIG. 5 illustrates examples of kernel notifications 90. The memory device 36 stores the operating system 34, the software application(s) 38, and the kernel-level agent 78. When any software application 38 (perhaps whether executing in the kernel mode 72 or in the user mode 74) starts/opens/launches/initiates, the operating system 34 creates the corresponding process 76 in response to opening/initiating/selecting/invocating the software application 38. When the operating system 34 and/or the kernel-level agent 78 has a cloud-delivered hooking functionality enabled, the kernel-level agent 78 registers for the kernel notification(s) 90 from the kernel 70. For example, the kernel notification 90 alerts the kernel-level agent 78 to the process 76 created by the kernel 70. While any notification scheme may be used, the kernel 70 may have a callback mechanism (such as a callback object) that informs or alerts the kernel-level agent 78 of the process 76 previously started in response to the software application 38 (e.g., creation, thread creation, handle requests, image loading, and other defined conditions). So, when the operating system 34 creates or starts the process 76, the kernel 70 may send or issue the kernel notification 90 to the kernel-level agent 78.

The kernel-level agent 78 may then inject the cloud-delivered hook 20. When the kernel-level agent 78 is alerted to the creation or start of the process 76 (such as the callback notification 90), the kernel-level agent 78 has kernel permission to inject the cloud-delivered hook 20 into the newly-created process 76 prior to execution. The kernel-level agent 78, interfacing with the operating system 34 and/or the kernel 70, identifies one or more Dynamic Link Libraries (or DLLs) 100 loaded or registered by the process 76. The kernel-level agent 78, for example, may register for DLL notifications 90 from the kernel 70 (such as another callback object) that inform the kernel-level agent 78 of each Dynamic Link Library 100 loaded/registered/specified by the process 76. The kernel-level agent 78 may then compare the loaded/registered/specified DLLs 100 to the cloud-delivered hooking configuration data 62. As a simple example, as the process 76 loads, the process 76 may notify the kernel-level agent 78 of any filename 102 (or other unique identifier) associated with the process 76. The kernel-level agent 78 may compare the DLLs/filenames 100/102 loaded or registered by the process 76 to the filenames of the cloud-delivered DLLs 104 specified by the cloud-delivered hooking configuration data 62. Should the kernel-level agent 78 determine a match between the loaded/registered DLLs/filenames 100/102 to the cloud-delivered hooking configuration data 62, the kernel-level agent 78 retrieves the corresponding cloud-delivered DLL 104 specified by the cloud-delivered hooking configuration data 62. The kernel-level agent 78 injects the cloud-delivered DLL 104 into the process 76. While the examples may utilize any injection scheme specified by any operating system, FIG. 5 illustrates Asynchronous Procedure Calls (or APCs) 106 utilized by the WINDOWS^{®} operating system. The kernel-level agent 78 may thus invoke the APCs 106 to inject the cloud-delivered DLL 104 into the process 76. The APC 106 queue functions to threads. When a thread is scheduled, the corresponding function is run. The kernel-level agent 78 thus allocates the cloud-delivered hooking configuration data 62 in the target process 76, and a memory address 108 that points to the stored cloud-delivered hooking configuration data 62 is written to the cloud-delivered DLL 104 injected into the process 76. The cloud-delivered DLL 104 thus applies the cloud-delivered hook 20 to the corresponding target function 42 specified by the cloud-delivered hooking configuration data 62. When these hooked functions are called from this point forward, the cloud-delivered DLL 104 (injected into the process 76) gains control of execution before the target function 42 and consults the cloud-delivered hooking configuration data 62 (via a pointer to the memory address 108) to decide how to proceed. The cloud-delivered hooking configuration data 62 may specify basic filtering of the events 46 to mitigate performance issues and/or to reduce or narrow reported events of interest.

The cloud-delivered hooking configuration data 62 is external to the cloud-delivered DLL 104. Because the cloud-delivered hooking configuration data 62 is received from the cloud computing environment 22 (illustrated in FIGs. 1-3), the cloud-delivered hooking configuration data 62 is dynamic and linked to the corresponding cloud-delivered DLL 104 injected into the process 76. While the kernel-level agent 78 may allocate any portion of the memory device 36 for the cloud-delivered hooking configuration data 62, the kernel-level agent 78 may have permission to allocate a portion of the private space in the memory device 36 allocated/dedicated to the process 76. Wherever the kernel-level agent 78 writes/stores the cloud-delivered hooking configuration data 62, the kernel-level agent 78 determines the pointer to the memory address 108 to the cloud-delivered hooking configuration data 62 and writes the memory address 108 to the cloud-delivered DLL 104 injected into the process 76. When the process 76 or the operating system 34 reads or executes the injected, cloud-delivered DLL 104, the process 76 or OS 34 reads the memory address 108 that links to the cloud-delivered hooking configuration data 62 specified by the cloud computing environment 22. Because the cloud-delivered hooking configuration data 62 is external to the cloud-delivered DLL 104, the cloud-delivered hooking configuration data 62 may be dynamically and very quickly changed/updated/deleted without reloading or re-registering the cloud-delivered DLL 104. Moreover, because the cloud-delivered hooking configuration data 62 is external to the cloud-delivered DLL 104, different hooking schemes may be specified for different processes 76. The cloud-delivered hooking configuration data 62, in other words, allows different cloud-delivered hooks 20 to be invoked for different DLLs 100/104 and/or for different processes 76. A software developer may thus remotely enable and define a first set of cloud-delivered hooks 20 for a first process name (such as "chrome.exe") and also remotely enable and define a different, second set of cloud-delivered hooks 20 for a second process name ("excel.exe").

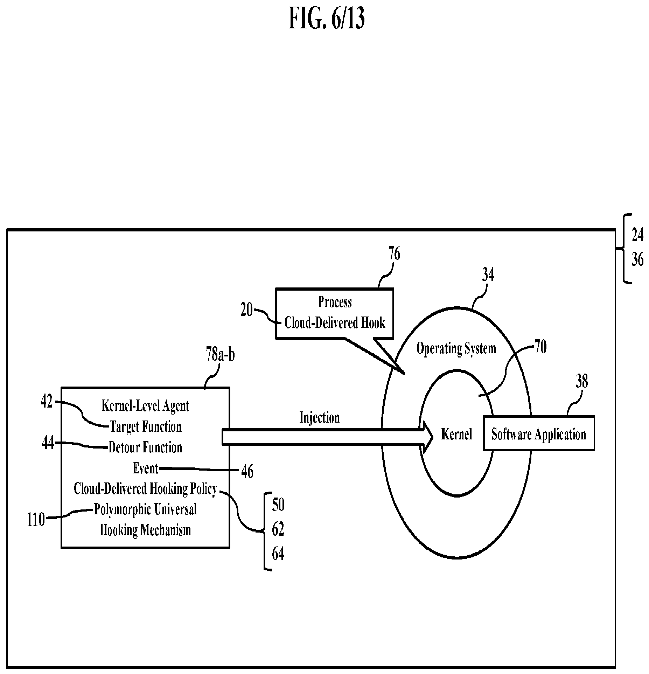

FIGs. 6-8 illustrate examples of a polymorphic universal hooking mechanism 110. The memory device 36 is illustrated within the client/endpoint computer 24. The polymorphic universal hooking mechanism 110 is defined and implemented by the cloud-delivered DLL 104. The polymorphic universal hooking mechanism 110 is a common or universal hook routine that services any number of target functions 42, regardless of the target function's specific parameters or signature. Because the cloud-delivered hooking configuration data 62 is externally stored to the cloud-delivered DLL 104 injected into the process 76 (as explained and illustrated with reference to FIG. 5), the cloud-delivered hooking configuration data 62 is automatically formatted via the polymorphic universal hooking mechanism 110 to the target function 42. The cloud computing environment 22 delivers, at any time, the cloud-delivered hooking configuration data 62 that specifies instructions for how the universal hooking mechanism 110 is applied to a single, specific target function 42 or to a plurality of target functions 42. The polymorphic universal hooking mechanism 110 thus satisfies any target/detour signature requirement, thus eliminating a one-to-one exact signature matching effort. Once the universal hooking mechanism 110 is established, the cloud computing environment 22 (illustrated in FIGs. 1-3) may dynamically instruct the host client/endpoint computer 24 to hook any specified target function(s) 42, merely by updating the cloud-delivered hooking configuration data 62. The cloud-delivered hooking configuration data 62 may dynamically increase, or decrease, the number of target functions 42 to hook.

The universal hooking mechanism 110 greatly improves computer functioning. The universal hooking mechanism 110 is polymorphic and thus adapts to any form or structure required by the target function 42. Conventional hooking procedures (such as MICROSOFT^{®} DETOURS^{®}) have strict signature requirements. That is, any detour function must have an exact same call signature as a target function. In practical words, this strict signature requirement means that, for every function to be hooked, a human user must provide an explicit implementation of a substitute function, which requires substantial effort and expertise. Moreover, the strict signature requirement also requires recompiling and releasing a new version of the software product which implements the conventional MICROSOFT^{®} DETOURS^{®} in order to change which functions are hooked. The universal hooking mechanism 110, in contradistinction, removes this strict signature requirement for an explicit matching of the target function 42 and the substitute detour function 44. The universal hooking mechanism 110 is implemented as a single function which behaves in a polymorphic manner. The universal hooking mechanism 110 may be used for all functions to be hooked, without releasing a new version of the software product. Moreover, the universal hooking mechanism 110 may be automated to generate the cloud-delivered hooks 20 in response to pre-defined threat scenarios, monitoring objectives, or debugging efforts. These packages of cloud-delivered hooks 20, in particular, may be generated by artificial intelligence (or AI) schemes that are used for automated identification of behaviors, errors, performance issues, and malware threats. The auto-generated cloud-delivered hooks 20 may then be dispersed/distributed to clients in the field for near real-time monitoring response.

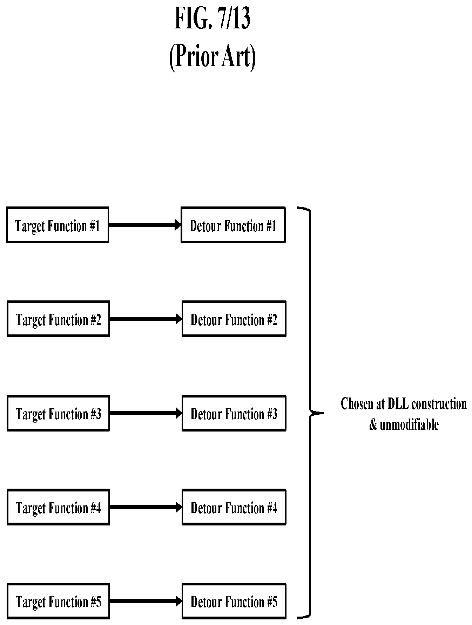

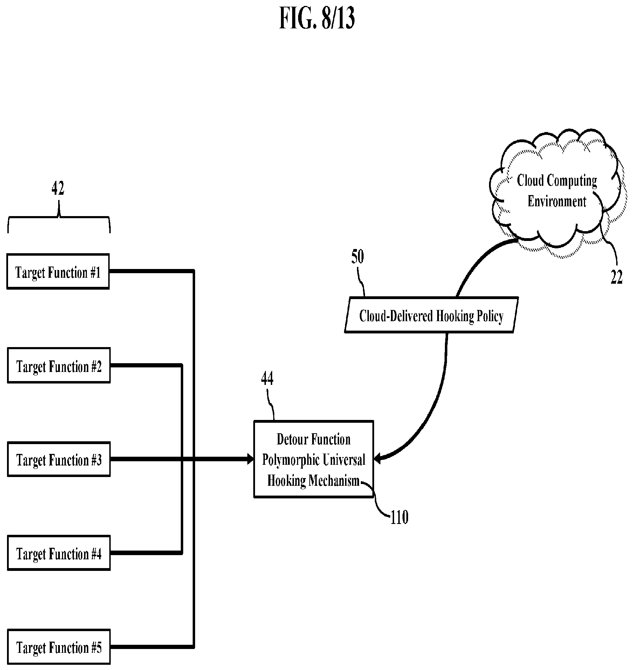

FIGs. 7-8 dramatically illustrate the improved computer functioning provided by the universal hooking mechanism 110. FIG. 7 illustrates the conventional MICROSOFT^{®} DETOURS^{®} hooking procedure that requires a one-to-one relationship between each target function and its corresponding detour function. That is, if five (5) target functions are hooked, the conventional MICROSOFT^{®} DETOURS^{®} hooking procedure requires five (5) corresponding detour functions. Moreover, those one-to-one hooking relationships must be implemented and shipped in a software product. FIG. 8, in contradistinction, illustrates the universal hooking mechanism 110. Even though the same five target functions 42 are hooked, the single detour function 44 is used that implements the universal hooking mechanism 110. The universal hooking mechanism 110 thus eliminates the need for the laborious and tedious one-to-one relationship. No modification is needed to the cloud-delivered DLL 104 that runs on the targeted client or endpoint computer 24 (illustrated in FIG. 6). Instead, the cloud computing environment 22 specifies or defines (via the cloud-delivered hooking policy 50) how each target function 42 is intercepted using the universal hooking mechanism 110 to the single detour function 44. The cloud-delivered hooking policy 50 may be sent to amend or update a list of the target functions 42 to be intercepted. The number of target functions 42, at any time, may be increased or decreased, simply because all the target functions 42 point to the same, single detour function 44 using the universal hooking mechanism 110. No additional program code need be written, and no software release is required. The cloud-delivered hooking configuration data 62 modifies the target function 42 by inserting the polymorphic universal hooking mechanism 110. If any DLL 100 loaded by the process 76 matches a DLL specified by the cloud-delivered hooking configuration data 62, then the polymorphic universal hooking mechanism 110 is applied as the detour function 44 to the target function 42. The universal hooking mechanism 110 may be applied to any/all x86 and x86-64 processor architectures.

The universal hooking mechanism 110 further improves computer functioning. The conventional MICROSOFT^{®} DETOURS^{®} functionality is officially only applicable to a process started by the program implementing the DETOURS^{®} functionality. The examples of the cloud-delivered hooking policy 50 utilize the MICROSOFT^{®} DETOURS^{®} functionality in a new and elegant manner by packaging DETOURS^{®} into the cloud-delivered DLL 104. The cloud-delivered DLL 104 may then be novelly injected into the process 76 after start. The examples of the cloud-delivered hooking policy 50 using the universal hooking mechanism 110, in other words, do not start the process 76. The kernel-level agent 78, in contradistinction, reacts to the kernel notification of the process 76 (perhaps via the kernel notifications 90 explained with reference to FIG. 5). The universal hooking mechanism 110 thus need not be implemented or added into the software application 38 or into the process 76. The cloud-delivered hooking policy 50 thus injects the cloud-delivered DLL 104 into the process 76 in response to kernel notification 90 from the kernel 70.

The universal hooking mechanism 110 provides still more improvements to computer functioning. Conventional hooking procedures (such as MICROSOFT^{®} DETOURS^{®}) have strict signature requirements. That is, conventional hooking procedures implement one (1) detour function for each one (1) target function to be hooked. This one-to-one prevents hooking never-before-considered functions without releasing a new version of the DLL which uses DETOURS^{®}. The universal hooking mechanism 110, in contradistinction, uses a single, polymorphic function specification which is a universally or commonly valid detour function 44 for any target function 42. The universal hooking mechanism 110 enables dynamic updating of the cloud-delivered hooking configuration data 62 without releasing a new version of the injected cloud-delivered DLL 104. The cloud-delivered DLL 104 (specified by the cloud-delivered hooking configuration data 62) need merely externally point or link to the remotely stored/located cloud-delivered hooking configuration data 62. The cloud-delivered hooking policy 50 is thus unrestrained and may specify any and/or every function in any module (*e.g.,* the uploaded DLL 100) and/or in any process 76.

The cloud-delivered hooking policy 50 instruments any of the software applications 38. Once the cloud-delivered hook 20 is injected into the process 76 started in response to the software application 38, the kernel-level agent 78 may thus receive the instrumented events 46. When any cloud-delivered hook 20 is executed, the corresponding event(s) 46 is/are generated and the kernel 70 may alert the kernel-level agent 78. The event 46 logs, documents, and/or alerts of the cloud-delivered hook 20 (such as messages, input/output requests, system calls, reads/writes, launches). If the event 46 satisfies the cloud-delivered hooking template data 64 specified by the cloud-delivered hooking policy 50, then the kernel-level agent 78 may alert the cloud computing environment 22. The kernel-level agent 78 may generate and send the event notification 80 as defined by the cloud-delivered hooking policy 50. The cloud-delivered hooking template data 64, for example, specifies how the kernel-level agent 78 evaluates and reports that a specific target function 42 was called in the specific process 76. For example, the cloud-delivered hooking template data 64 may apply a specific pattern to a local process, or to cloud a detection, based on the function name associated with the target function 42 and/or a process name associated with the process 76. Both the cloud-delivered hooking configuration data 62 and the cloud-delivered hooking template data 64 are cloud-controlled and may be updated at any time. The updated data 62 and 64 will take affect for any newly launched processes 76 on a WINDOWS^{®} system once upon receipt from the cloud computing environment 22. The cloud-delivered hooking policy 50 thus ensures that the event 46 (*e.g.,* the instrumentation output) is reported to the cloud computing environment 22 for logging/monitoring efforts.

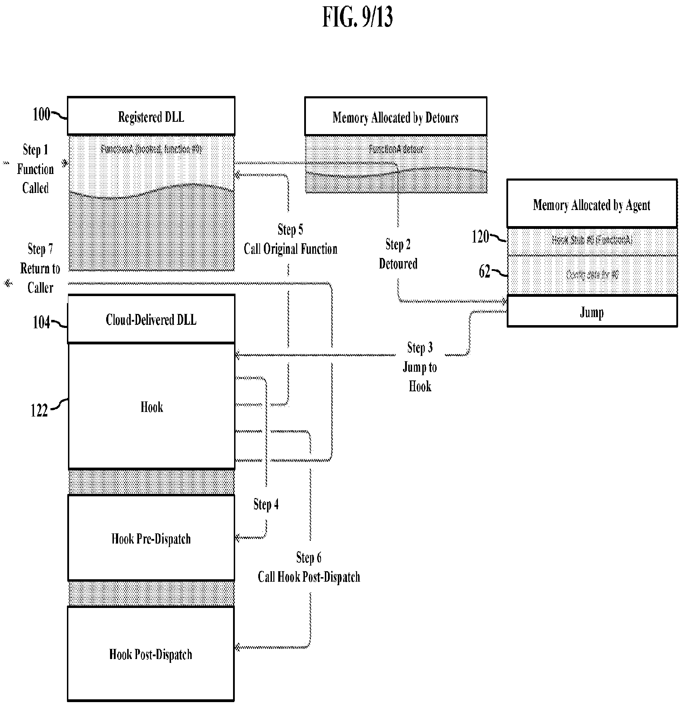

FIG. 9 illustrates examples of flow operations for cloud-delivered hooking. For each cloud-delivered hook 20 specified by the cloud computing environment 22 (illustrated by FIGs. 1-3), the kernel-level agent 78 (illustrated in FIGs. 4-6) generates a corresponding hook assembly stub 120 which stores the corresponding cloud-delivered hooking configuration data 62. No matter how many different cloud-delivered hooks 20 are specified, each one of the corresponding hook assembly stubs 120 jumps to a common hook thunk 122. The common hook thunk 122 preserves all volatile registers, before calling pre- and post-dispatch functions which perform the actual "work" (such as reporting that the target function 42 was called). In the pre-dispatch function, the cloud-delivered DLL 104 (injected into the process 76) may use a thread-local storage implementation to mark the thread as processing the corresponding cloud-delivered hook 20. By marking the thread, this marking scheme prevents re-entering the dispatch functions if multiple cloud-delivered hooks 20 are invoked in a single call graph. In the post-dispatch function, this marker is cleared.

The cloud-delivered hooking policy 50 is agnostic to the operating system and to the hooking procedure. This disclosure above mostly describes the MICROSOFT^{®} WINDOWS^{®} operating system and the MICROSOFT^{®} DETOURS^{®} hooking procedure, as these products are ubiquitous and widely used in software instrumentation. In the WINDOWS^{®} x86 and x86-64 environment, the cloud-delivered hooking policy 50 and the universal hooking mechanism 110 need only be concerned with the calling conventions used by WINDOWS^{®} (such as cdecl, syscall, stdcall, fastcall for x86, and MICROSOFT^{®} x64 for x86-64). On MICROSOFT^{®} x86, there is enough common ground between each of the conventions to hook functions using any convention without interfering when the function is called. The cloud-delivered hooking policy 50, however, may be adapted to any operating system, to any hooking procedure, and to any calling convention for functions to be hooked. The cloud-delivered hooking policy 50, for example, may be adapted to any of the macOS and iOS operating systems, to any of the Android operating systems, to any of the Linux operating systems, to any of the Unix operating systems, and to any other operating system. Even though other operating systems and processor architectures may use different calling conventions, the cloud-delivered hooking policy 50 may be adapted to transparently support all potential calling conventions used on the corresponding operating system.

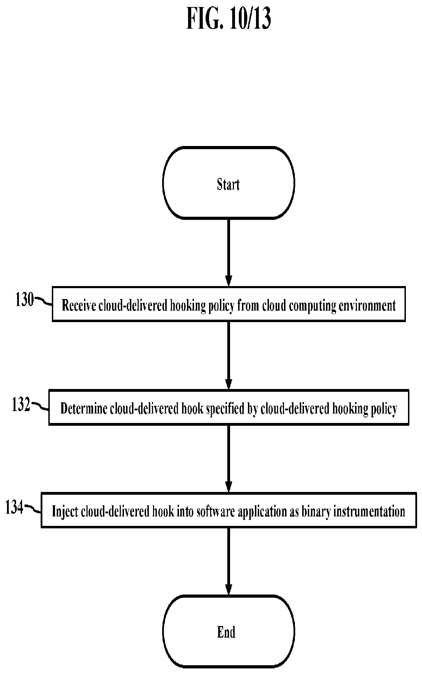

FIG. 10 illustrates an example of a method executed by the client/endpoint computer 24 that hooks the software application 38. The client/endpoint computer 24 receives the cloud-delivered hooking policy 50 from the cloud computing environment 22 (Block 130). The client/endpoint computer 24 determines the cloud-delivered hook 20 specified by the cloud-delivered hooking policy 50 (Block 132). The client/endpoint computer 24 injects or inserts the cloud-delivered hook 20 into the software application 38 as a binary instrumentation (Block 134).

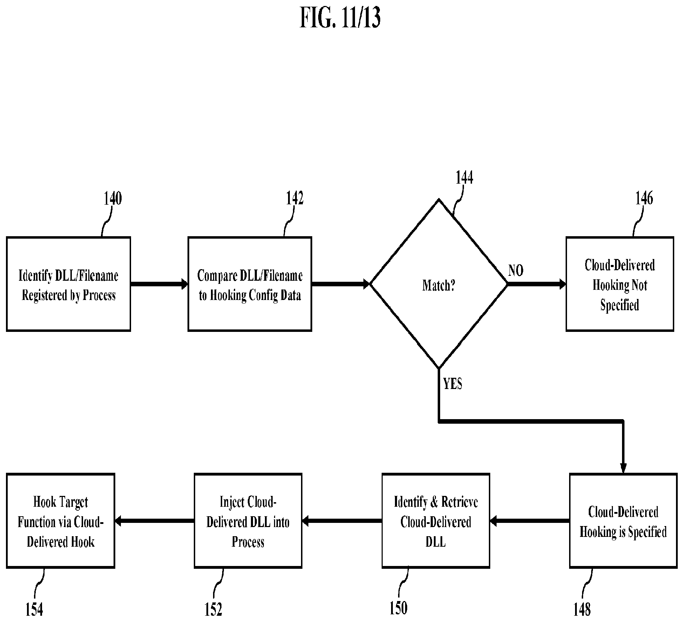

FIG. 11 illustrates another example of a method executed by the client/endpoint computer 24 for hooking the software application 38. When the client/endpoint computer 24 receives the cloud-delivered hooking policy 50, the client/endpoint computer 24 identifies the DLL/filename 100/102 registered by the process 76 associated with the software application 38 (Block 140). The client/endpoint computer 24 compares the DLL/filename 100/102 to the cloud-delivered hooking configuration data 62 specified by the cloud-delivered hooking policy 50 received from the cloud computing environment 22 (Block 142). If the DLL/filename 100/102 fails to match the cloud-delivered hooking policy 50 (Block 144), then the client/endpoint computer 24 may determine that cloud-delivered hooking is not specified for the process 76 and/or for the software application 38 (Block 146). However, if the DLL/filename 100/102 matches the cloud-delivered hooking policy 50 (Block 140), then the client/endpoint computer 24 determines that cloud-delivered hooking is specified (Block 148). The client/endpoint computer 24 identifies and retrieves the cloud-delivered Dynamic Link Library 104 specified by the cloud-delivered hooking policy 50 (Block 150). The cloud-delivered Dynamic Link Library 104 may have been included in the cloud-delivered hooking policy 50, or the cloud-delivered Dynamic Link Library 104 may be separately retrieved from the cloud computing environment 22 or some other source. However the cloud-delivered Dynamic Link Library 104 is obtained, the client/endpoint computer 24 injects the cloud-delivered Dynamic Link Library 104 into the existing process 76 started by the kernel 70 in response to launching/opening/starting of the software application 38 (Block 152). The client/endpoint computer 24 hooks the target function 42 specified by the cloud-delivered Dynamic Link Library 104 by implementing the cloud-delivered hook 20 according to the cloud-delivered hooking policy 50 (Block 154).

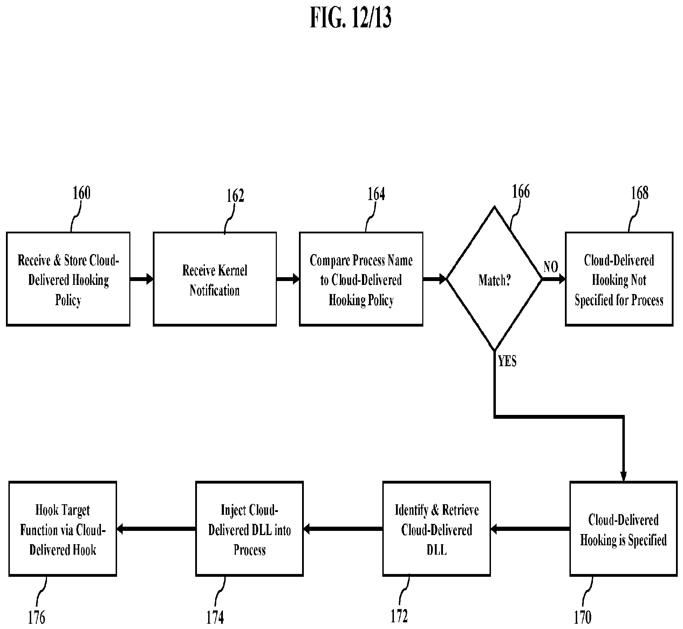

FIG. 12 illustrates another example of a method executed by the client/endpoint computer 24 for hooking the software application 38. The client/endpoint computer 24 receives and stores the cloud-delivered hooking policy 50 from the cloud computing environment 22 (Block 160). The client/endpoint computer 24 receives the kernel notification 90 sent from the kernel 70 (Block 162). The kernel notification 90 alerts of the process 76 created by the kernel 70 in response to the launching/opening/starting of the software application 38. The client/endpoint computer 24 identifies the process name associated with the process 76 and compares the process name to the cloud-delivered hooking policy 50 (Block 164). If the process name fails to match the cloud-delivered hooking policy 50 (Block 166), then the client/endpoint computer 24 determines that cloud-delivered hooking is not specified for the process 76 and/or the software application 38 (Block 168). However, if the process name matches the cloud-delivered hooking policy 50 (Block 166), then the client/endpoint computer 24 determines that cloud-delivered hooking is specified (Block 170). The client/endpoint computer 24 obtains the cloud-delivered Dynamic Link Library 104 specified by the cloud-delivered hooking policy 50 (Block 172). The cloud-delivered Dynamic Link Library 104 may have been included in the cloud-delivered hooking policy 50, or the cloud-delivered Dynamic Link Library 104 may be separately retrieved from the cloud computing environment 22 or some other source. However the cloud-delivered Dynamic Link Library 104 is obtained, the client/endpoint computer 24 injects the cloud-delivered Dynamic Link Library 104 into the existing process 76 started by the kernel 70 in response to launching/opening/starting of the software application 38 (Block 174). The client/endpoint computer 24 hooks the target function 42 specified by the cloud-delivered Dynamic Link Library 104 by implementing the cloud-delivered hook 20 according to the cloud-delivered hooking policy 50 (Block 154).

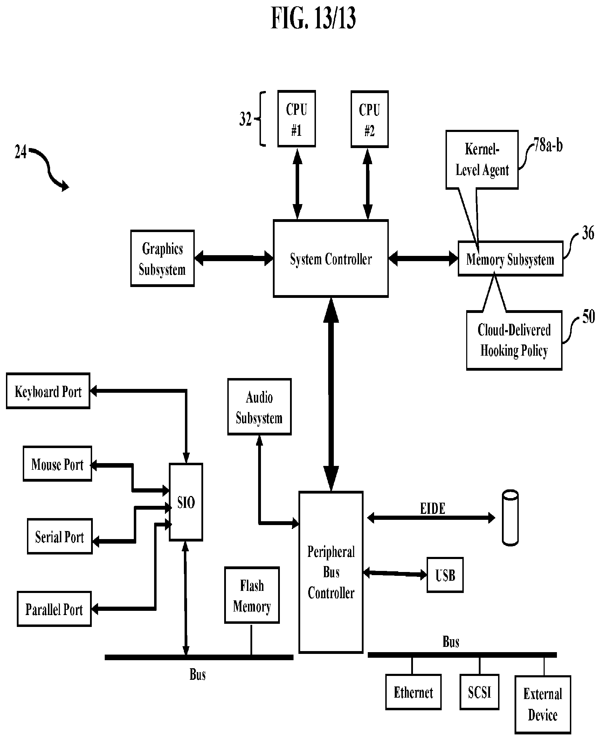

FIG. 13 illustrates a more detailed example of the operating environment. FIG. 11 is a more detailed block diagram illustrating the client/endpoint computer 24. The kernel-level agent 78 is stored in the memory subsystem or device 36. One or more of the processors 32 communicate with the memory subsystem or device 36 and execute the kernel-level agent 78. Examples of the memory subsystem or device 36 may include Dual In-Line Memory Modules (DIMMs), Dynamic Random Access Memory (DRAM) DIMMs, Static Random Access Memory (SRAM) DIMMs, non-volatile DIMMs (NV-DIMMs), storage class memory devices, Read-Only Memory (ROM) devices, compact disks, solid-state, and any other read/write memory technology. Because the client/endpoint computer 24 is known to those of ordinary skill in the art, no detailed explanation is needed.

The client/endpoint computer 24 may have any embodiment. This disclosure mostly discusses the client/endpoint computer 24 as the laptop 30. The cloud-delivered hooking policy 50 and the kernel-level agent 78, however, may be easily adapted to other operating environments, such as a computer server, switch, router, or any other network member 60 of the cloud computing environment 22. The cloud-delivered hooking policy 50 and the kernel-level agent 78 may also be easily adapted to mobile computing, such as where the client/endpoint computer 24 may be a smartphone, a tablet computer, or a smartwatch. The cloud-delivered hooking policy 50 and the kernel-level agent 78 may also be easily adapted to other embodiments of smart devices, such as a television, an audio device, a remote control, and a recorder. The cloud-delivered hooking policy 50 and the kernel-level agent 78 may also be easily adapted to still more smart appliances, such as washers, dryers, and refrigerators. Indeed, as cars, trucks, and other vehicles grow in electronic usage and in processing power, the cloud-delivered hooking policy 50 and the kernel-level agent 78 may be easily incorporated into any vehicular controller.

The above examples of the cloud-delivered hooking policy 50 and the kernel-level agent 78 may be applied regardless of the networking environment. The cloud-delivered hooking policy 50 and the kernel-level agent 78 may be easily adapted to stationary or mobile devices having wide-area networking (*e.g.,* 4G/LTE/5G cellular), wireless local area networking (WI-FI^{®}), near field, and/or BLUETOOTH^{®} capability. The cloud-delivered hooking policy 50 and the kernel-level agent 78 may be applied to stationary or mobile devices utilizing any portion of the electromagnetic spectrum and any signaling standard (such as the IEEE 802 family of standards, GSM/CDMA/TDMA or any cellular standard, and/or the ISM band). The cloud-delivered hooking policy 50 and the kernel-level agent 78, however, may be applied to any processor-controlled device operating in the radio-frequency domain and/or the Internet Protocol (IP) domain. The cloud-delivered hooking policy 50 and the kernel-level agent 78 may be applied to any processor-controlled device utilizing a distributed computing network, such as the Internet (sometimes alternatively known as the "World Wide Web"), an intranet, a local-area network (LAN), and/or a wide-area network (WAN). The cloud-delivered hooking policy 50 and the kernel-level agent 78 may be applied to any processor-controlled device utilizing power line technologies, in which signals are communicated via electrical wiring. Indeed, the many examples may be applied regardless of physical componentry, physical configuration, or communications standard(s).

The client/endpoint computer 24 may utilize any processing component, configuration, or system. For example, the cloud-delivered hooking policy 50 and the kernel-level agent 78 may be easily adapted to any desktop, mobile, or server central processing unit or chipset offered by INTEL^{®}, ADVANCED MICRO DEVICES^{®}, ARM^{®}, APPLE^{®}, TAIWAN SEMICONDUCTOR MANUFACTURING^{®}, QUALCOMM^{®}, or any other manufacturer. The client/endpoint computer 24 may even use multiple central processing units or chipsets, which could include distributed processors or parallel processors in a single machine or multiple machines. The central processing unit or chipset can be used in supporting a virtual processing environment. The central processing unit or chipset could include a state machine or logic controller. When any of the central processing units or chipsets execute instructions to perform "operations," this could include the central processing unit or chipset performing the operations directly and/or facilitating, directing, or cooperating with another device or component to perform the operations.

The cloud-delivered hooking policy 50 and the kernel-level agent 78 may use packetized communications. When the client/endpoint computer 24 communicates via the communications network 28, information may be collected, sent, and retrieved. The information may be formatted or generated as packets of data according to a packet protocol (such as the Internet Protocol). The packets of data contain bits or bytes of data describing the contents, or payload, of a message. A header of each packet of data may be read or inspected and contain routing information identifying an origination address and/or a destination address.

The communications network 28 may utilize any signaling standard. The cloud computing environment 22 may mostly use wired networks to interconnect the network members 60. However, the communications network 28 and the cloud computing environment 22 may utilize any communications device using the Global System for Mobile (GSM) communications signaling standard, the Time Division Multiple Access (TDMA) signaling standard, the Code Division Multiple Access (CDMA) signaling standard, the "dual-mode" GSM-ANSI Interoperability Team (GAIT) signaling standard, or any variant of the GSM/CDMA/TDMA signaling standard. The communications network 28 and the cloud computing environment 22 may also utilize other standards, such as the I.E.E.E. 802 family of standards, the Industrial, Scientific, and Medical band of the electromagnetic spectrum, BLUETOOTH^{®}, low-power or near-field, and any other standard or value.

The cloud-delivered hooking policy 50 may be physically embodied on or in a computer-readable storage medium. This computer-readable medium, for example, may include CD-ROM, DVD, tape, cassette, floppy disk, optical disk, memory card, memory drive, and large-capacity disks. This computer-readable medium, or media, could be distributed to end-subscribers, licensees, and assignees. A computer program product comprises processor-executable instructions for providing the cloud-delivered hooking policy 50, as the above paragraphs explain.

The diagrams, schematics, illustrations, and the like represent conceptual views or processes illustrating examples of cloud services malware detection. The functions of the various elements shown in the figures may be provided through the use of dedicated hardware as well as hardware capable of executing instructions. The hardware, processes, methods, and/or operating systems described herein are for illustrative purposes and, thus, are not intended to be limited to any particular named manufacturer or service provider.

As used herein, the singular forms "a," "an," and "the" are intended to include the plural forms as well, unless expressly stated otherwise. It will be further understood that the terms "includes," "comprises," "including," and/or "comprising," when used in this Specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

It will also be understood that, although the terms first, second, and so on, may be used herein to describe various elements, these elements should not be limited by these terms. These terms are only used to distinguish one element from another. For example, a first computer or container could be termed a second computer or container and, similarly, a second device could be termed a first device without departing from the teachings of the disclosure.

## Claims

1. A method executed by a computer (24) that hooks a software application (38), comprising:
receiving (130), by the computer (24), a cloud-delivered hooking policy (50) from a cloud computing environment (22);
determining (132), by the computer (24), a cloud-delivered hook (20) specified by the cloud-delivered hooking policy (50);
receiving, by a kernel-level agent installed to the computer, a kernel notification from a kernel notifying of a process associated with the software application (38); and
injecting (134), by the computer (24), the cloud-delivered hook (20) into the software application (38) as a binary instrument by injecting a single polymorphic universal hooking mechanism valid for all functions into the process created in response to the software application (38), wherein the single polymorphic universal hooking mechanism is a common or universal hook routine that services any number of target functions, regardless of the target function's specific parameters or signature.

2. The method of claim 1, further comprising determining a target function specified by the cloud-delivered hooking policy (50).

3. The method of claim 2, further comprising hooking the target function using the cloud-delivered hook.

4. The method of any preceding claim, further comprising determining a detour function specified by the cloud-delivered hooking policy (50).

5. The method of any preceding claim further comprising storing the cloud-delivered hooking policy (50) to a portion of a memory device dedicated to the software application (38).

6. The method of any preceding claim further comprising storing the cloud-delivered hooking policy (50) to a portion of a memory device dedicated to the process.

7. The method of any preceding claim, further comprising specifying a polymorphic universal hooking mechanism valid for all functions.

8. The method of any preceding claim, wherein determining, by the computer (24), a cloud-delivered hook (20) specified by the cloud-delivered hooking policy (50) comprises:
identifying a filename (102) loaded or registered by the process associated with the software application (38);
determining that the filename (102) corresponds to a filename of a cloud-delivered Dynamic Link Library (104) specified by the cloud-delivered hooking policy (50); and
externally storing the cloud-delivered hook (20) from the cloud-delivered Dynamic Link Library (104).

9. The method of any of claims 1 to 7, wherein determining, by the computer (24), a cloud-delivered hook (20) specified by the cloud-delivered hooking policy (50) comprises:
identifying a filename (102) loaded or registered by a process associated with the software application (38); and
determining that the filename (102) corresponds to a filename of a cloud-delivered Dynamic Link Library (104) specified by the cloud-delivered hooking policy (50); and wherein the operations further comprise specifying a single polymorphic universal hooking mechanism valid for all functions specified by the cloud-delivered Dynamic Link Library (104).

10. The method of any preceding claim wherein determining the cloud-delivered hook (20) specified by the cloud-delivered hooking policy (50) comprises:
identifying a filename (102) loaded or registered by a process associated with the software application (38); and
determining that the filename (102) corresponds to a filename of a cloud-delivered Dynamic Link Library (104) specified by the cloud-delivered hooking policy (50); and
wherein injecting, by the computer (24), the cloud-delivered hook (20) into the software application (38) as the binary instrument comprises
instrumenting the process associated with the software application (38) by injecting the cloud-delivered hook (20) specified by the cloud-delivered hooking policy (50).

11. A computer (24) that hooks a software application (38), comprising:
a central processing unit; and
a memory device (36) storing instructions that, when executed by the central processing unit, cause the central processing unit to carry out the method of any proceeding claim.

12. A computer program which, when executed by a central processing unit, is configured to perform the method of any one of claims 1 to 10.

## Patentansprüche

1. Ein Verfahren, das von einem Computer (24) ausgeführt wird, der eine Softwareanwendung (38) mit einem Hook versieht, das Folgendes beinhaltet:
Empfangen (130), durch den Computer (24), einer Cloud-bereitgestellten Hooking-Richtlinie (50) von einer Cloud-Computing-Umgebung (22);
Bestimmen (132), durch den Computer (24), eines Cloud-bereitgestellten Hooks (20), der durch die Cloud-bereitgestellte Hooking-Richtlinie (50) spezifiziert ist;
Empfangen, durch einen auf dem Computer installierten Kernel-Level-Agent, einer Kernel-Benachrichtigung von einem Kernel, die einen Prozess meldet, der mit der Softwareanwendung (38) assoziiert ist; und
Injizieren (134), durch den Computer (24), des Cloud-bereitgestellten Hooks (20) in die Softwareanwendung (38) als binäre Instrumentierung durch Injizieren eines einzelnen polymorphen universellen Hooking-Mechanismus, der für alle Funktionen gültig ist, in den Prozess, der als Reaktion auf die Softwareanwendung (38) erstellt wurde, wobei der einzelne polymorphe universelle Hooking-Mechanismus eine gemeinsame oder universelle Hook-Routine ist, die eine beliebige Anzahl von Zielfunktionen bedient, unabhängig von den spezifischen Parametern oder der Signatur der Zielfunktion.

2. Verfahren gemäß Anspruch 1, das ferner das Bestimmen einer Zielfunktion beinhaltet, die durch die Cloud-bereitgestellte Hooking-Richtlinie (50) spezifiziert ist.

3. Verfahren gemäß Anspruch 2, das ferner das Versehen der Zielfunktion mit einem Hook unter Verwendung des Cloud-bereitgestellten Hooks beinhaltet.

4. Verfahren gemäß einem der vorhergehenden Ansprüche, das ferner das Bestimmen einer Umleitungsfunktion beinhaltet, die durch die Cloud-bereitgestellte Hooking-Richtlinie (50) spezifiziert ist.

5. Verfahren gemäß einem der vorhergehenden Ansprüche, das ferner das Speichern der Cloud-bereitgestellten Hooking-Richtlinie (50) in einem Abschnitt einer Speichervorrichtung beinhaltet, die der Softwareanwendung (38) dediziert ist.

6. Verfahren gemäß einem der vorhergehenden Ansprüche, das ferner das Speichern der Cloud-bereitgestellten Hooking-Richtlinie (50) in einem Abschnitt einer Speichervorrichtung beinhaltet, die dem Prozess dediziert ist.

7. Verfahren gemäß einem der vorhergehenden Ansprüche, das ferner das Spezifizieren eines polymorphen universellen Hooking-Mechanismus beinhaltet, der für alle Funktionen gültig ist.

8. Verfahren gemäß einem der vorhergehenden Ansprüche, wobei das Bestimmen, durch den Computer (24), eines Cloud-bereitgestellten Hooks (20), der durch die Cloud-bereitgestellte Hooking-Richtlinie (50) spezifiziert ist, Folgendes beinhaltet:
Identifizieren eines Dateinamens (102), der von dem Prozess geladen oder registriert wird, der mit der Softwareanwendung (38) assoziiert ist;
Bestimmen, dass der Dateiname (102) einem Dateinamen einer Cloud-bereitgestellten Dynamic Link Library (104) entspricht, die durch die Cloud-bereitgestellte Hooking-Richtlinie (50) spezifiziert ist; und
externes Speichern des Cloud-bereitgestellten Hooks (20) aus der Cloud-bereitgestellten Dynamic Link Library (104).

9. Verfahren gemäß einem der Ansprüche 1 bis 7, wobei das Bestimmen, durch den Computer (24), eines Cloud-bereitgestellten Hooks (20), der durch die Cloud-bereitgestellte Hooking-Richtlinie (50) spezifiziert ist, Folgendes beinhaltet:
Identifizieren eines Dateinamens (102), der von einem Prozess geladen oder registriert wird, der mit der Softwareanwendung (38) assoziiert ist; und
Bestimmen, dass der Dateiname (102) einem Dateinamen einer Cloud-bereitgestellten Dynamic Link Library (104) entspricht, die durch die Cloud-bereitgestellte Hooking-Richtlinie (50) spezifiziert ist; und wobei die Operationen ferner das Spezifizieren eines einzelnen polymorphen universellen Hooking-Mechanismus beinhalten, der für alle Funktionen gültig ist, die durch die Cloud-bereitgestellte Dynamic Link Library (104) spezifiziert sind.

10. Verfahren gemäß einem der vorhergehenden Ansprüche, wobei das Bestimmen des Cloud-bereitgestellten Hooks (20), der durch die Cloud-bereitgestellte Hooking-Richtlinie (50) spezifiziert ist, Folgendes beinhaltet:
Identifizieren eines Dateinamens (102), der von einem Prozess geladen oder registriert wird, der mit der Softwareanwendung (38) assoziiert ist; und
Bestimmen, dass der Dateiname (102) einem Dateinamen einer Cloud-bereitgestellten Dynamic Link Library (104) entspricht, die durch die Cloud-bereitgestellte Hooking-Richtlinie (50) spezifiziert ist; und
wobei das Injizieren, durch den Computer (24), des Cloud-bereitgestellten Hooks (20) in die Softwareanwendung (38) als die binäre Instrumentierung Folgendes beinhaltet: Instrumentieren des Prozesses, der mit der Softwareanwendung (38) assoziiert ist, durch Injizieren des Cloud-bereitgestellten Hooks (20), der durch die Cloud-bereitgestellte Hooking-Richtlinie (50) spezifiziert ist.

11. Ein Computer (24), der eine Softwareanwendung (38) mit einem Hook versieht, der Folgendes beinhaltet:
eine zentrale Verarbeitungseinheit; und
eine Speichervorrichtung (36), die Anweisungen speichert, die, wenn sie von der zentralen Verarbeitungseinheit ausgeführt werden, die zentrale Verarbeitungseinheit veranlassen, das Verfahren gemäß einem der vorhergehenden Ansprüche zu implementieren.

12. Ein Computerprogramm, das, wenn es von einer zentralen Verarbeitungseinheit ausgeführt wird, konfiguriert ist, um das Verfahren gemäß einem der Ansprüche 1 bis 10 durchzuführen.

## Revendications

1. Un procédé exécuté par un ordinateur (24) qui accroche une application logicielle (38), comprenant :
la réception (130), par l'ordinateur (24), d'une politique d'accrochage délivrée en nuage (50) à partir d'un environnement informatique en nuage (22) ;
la détermination (132), par l'ordinateur (24), d'un crochet délivré en nuage (20) spécifié par la politique d'accrochage délivrée en nuage (50) ;
la réception, par un agent de niveau noyau installé sur l'ordinateur, d'une notification de noyau à partir d'un noyau notifiant un processus associé à l'application logicielle (38) ; et
l'injection (134), par l'ordinateur (24), du crochet délivré en nuage (20) dans l'application logicielle (38) en tant qu'instrument binaire par injection d'un unique mécanisme d'accrochage universel polymorphe valide pour toutes les fonctions dans le processus créé en réponse à l'application logicielle (38), l'unique mécanisme d'accrochage universel polymorphe étant une routine de crochet commune ou
universelle qui dessert un nombre quelconque de fonctions cibles, indépendamment des paramètres spécifiques ou de la signature de la fonction cible.

2. Le procédé de la revendication 1, comprenant en outre la détermination d'une fonction cible spécifiée par la politique d'accrochage délivrée en nuage (50).

3. Le procédé de la revendication 2, comprenant en outre l'accrochage de la fonction cible à l'aide du crochet délivré en nuage.

4. Le procédé de n'importe quelle revendication précédente, comprenant en outre la détermination d'une fonction de détour spécifiée par la politique d'accrochage délivrée en nuage (50).

5. Le procédé de n'importe quelle revendication précédente comprenant en outre le stockage de la politique d'accrochage délivrée en nuage (50) dans une partie d'un dispositif de mémoire dédiée à l'application logicielle (38).

6. Le procédé de n'importe quelle revendication précédente comprenant en outre le stockage de la politique d'accrochage délivrée en nuage (50) dans une partie d'un dispositif de mémoire dédiée au processus.

7. Le procédé de n'importe quelle revendication précédente, comprenant en outre la spécification d'un mécanisme d'accrochage universel polymorphe valide pour toutes les fonctions.

8. Le procédé de n'importe quelle revendication précédente, dans lequel la détermination, par l'ordinateur (24), d'un crochet délivré en nuage (20) spécifié par la politique d'accrochage délivrée en nuage (50) comprend :
l'identification d'un nom de fichier (102) chargé ou enregistré par le processus associé à l'application logicielle (38) ;
la détermination que le nom de fichier (102) correspond à un nom de fichier d'une bibliothèque de liens dynamiques délivrée en nuage (104) spécifiée par la politique d'accrochage délivrée en nuage (50) ; et
le stockage en externe du crochet délivré en nuage (20) à partir de la bibliothèque de liens dynamiques délivrée en nuage (104).

9. Le procédé de n'importe lesquelles des revendications 1 à 7, dans lequel la détermination, par l'ordinateur (24), d'un crochet délivré en nuage (20) spécifié par la politique d'accrochage délivrée en nuage (50) comprend :
l'identification d'un nom de fichier (102) chargé ou enregistré par un processus associé à l'application logicielle (38) ; et
la détermination que le nom de fichier (102) correspond à un nom de fichier d'une bibliothèque de liens dynamiques délivrée en nuage (104) spécifiée par la politique d'accrochage délivrée en nuage (50) ; et dans lequel les opérations comprennent en outre la spécification d'un unique mécanisme d'accrochage universel polymorphe valide pour toutes les fonctions spécifiées par la bibliothèque de liens dynamiques délivrée en nuage (104).

10. Le procédé de n'importe quelle revendication précédente dans lequel la détermination du crochet délivré en nuage (20) spécifié par la politique d'accrochage délivrée en nuage (50) comprend :
l'identification d'un nom de fichier (102) chargé ou enregistré par un processus associé à l'application logicielle (38) ; et
la détermination que le nom de fichier (102) correspond à un nom de fichier d'une bibliothèque de liens dynamiques délivrée en nuage (104) spécifiée par la politique d'accrochage délivrée en nuage (50) ; et
dans lequel l'injection, par l'ordinateur (24), du crochet délivré en nuage (20) dans l'application logicielle (38) en tant qu'instrument binaire comprend l'instrumentation du processus associé à l'application logicielle (38) par injection du crochet délivré en nuage (20) spécifié par la politique d'accrochage délivrée en nuage (50).

11. Un ordinateur (24) qui accroche une application logicielle (38), comprenant :
une unité centrale de traitement ; et
un dispositif de mémoire (36) stockant des instructions qui, lorsqu'elles sont exécutées par l'unité centrale de traitement, amènent l'unité centrale de traitement à mettre en œuvre le procédé de n'importe quelle revendication précédente.

12. Un programme d'ordinateur qui, lorsqu'il est exécuté par une unité centrale de traitement, est configuré pour effectuer le procédé de l'une quelconque des revendications 1 à 10.
